## Europäisches Patentamt
## European Patent Office
## Office européen des brevets

(11) Publication number: **0 043 737**
**A1**

(12) # EUROPEAN PATENT APPLICATION

(21) Application number: **81303125.9**

(51) Int. Cl.³: **B 60 Q 1/16**

(22) Date of filing: **08.07.81**

(30) Priority: **08.07.80 PT 68993**

(43) Date of publication of application: **13.01.82**
**Bulletin 82/2**

(84) Designated Contracting States: **DE FR GB IT SE**

(71) Applicant: **Santos, José Pinto dos, Avenida de Joao Chrisostomo 70-4.andar Esq., Lisboa (PT)**

(71) Applicant: **Silva, Antonio dos Reis, Rua das Orquideas lote B-2, 3-Esq., Montijo (PT)**
Applicant: **David, Angelo Gonçalves, Rua Dionisio Saraiva 11, Almeirim (PT)**
Applicant: **Cabrita, Eduardo da Graça, Rua Jorge Afonso, 15-1-.Dto, Lisboa (PT)**
Applicant: **Fonseca, Humberto Duarte da, Avenida Almirante Reis 158-2. Esq., Lisboa (PT)**

(72) Inventor: **Santos, José Pinto dos, Avenida de Joao Chrisostomo 70-4.andar Esq., Lisboa (PT)**
Inventor: **Silva, Antonio dos Reis, Rua das Orquideas lote B-2, 3-Esq., Montijo (PT)**
Inventor: **David, Angelo Gonçalves, Rua Dionisio Saraiva 11, Almeirim (PT)**
Inventor: **Cabrita, Eduardo da Graça, Rua Jorge Afonso, 15-1-.Dto, Lisboa (PT)**
Inventor: **Fonseca, Humberto Duarte da, Avenida Almirante Reis 158-2. Esq., Lisboa (PT)**

(74) Representative: **Mayes, Stuart David et al, BOULT, WADE & TENNANT 27 Furnival Street, London, EC4A 1PQ (GB)**

(54) **Road vehicle with improved lighting system.**

(57) A road vehicle is fitted on its offside with «passing» lights (E, F, G) adapted to illuminate the opposite traffic lane for the benefit of drivers of oncoming vehicles. The passing lights (E, F, G) may be mounted at a similar height to the standard front lights (C, D) and rear lights or may be located at roof height. The passing lights (E, F, G) are preferably coloured or formed distinctively so as to be distinguished from the headlights (C, D) of the vehicle.

ROAD VEHICLE WITH IMPROVED LIGHTING SYSTEM

This invention relates to road vehicle lights for illumination of the road.

Driving by night through narrow and dark roads may be an ordeal. Headlights of vehicles approaching from the opposite direction, even when deflected as required by law in some countries, perilously restrict visibility of the very region of the road the driver needs to see in order to avoid accidents; in extreme situations a "blind spot" in created accounting for many cyclists and pedestrians being killed and for some drivers killing themselves by crashing into unperceived obstacles.

This problem has been ameliorated to some extent by having the light beam dipped and deflected to the nearside of the driver. However it will be seen that this is only a partial solution to the real problem. This concerns, at least, two vehicles and the whole solution must, therefore, consist of the parts that each of them can contribute. In fact, it is not really possible for any one driver during this passing of two vehicles to light up his own way, but it is quite easy for each of them to illuminate the way for the other.

The invention accordingly provides a road vehicle having mounted thereon at least one light adapted to illuminate an area of the road surface generally laterally of the vehicle on the offside thereof.

The invention has the great advantage that when two such vehicles meet on a typical two-way road, at night, the vehicles use not only their usual lower beams or dipped headlights but also at least one light source capable of illuminating effectively a region of the opposite traffic lane.

A further advantage of the invention is that, by using these "courtesy passing" lights", each driver also reduces the inconvenience his vehicle's lower beams can bring on the other driver.

Yet another advantage of the invention is that the resulting elimination of the blind spot and the increase in illumination of his own lane will, for each driver, bring about an important reduction of eye fatigue caused by conditions heretofore.

Some embodiments of the invention will now be described, by way of example, with reference to the accompanying drawings, in which:

Figure 1 is a diagrammatical aerial view of two road vehicles approaching each other on a road, being fitted with passing lights in accordance with the invention;

Figure 2 is a diagrammatical front elevation of one of the vehicles in Figure 1;

Figure 3 is a geometrical plan view of another such vehicle;

Figures 4 and 5 are schematic plan and front elevations respectively of a vehicle differently so fitted;

Figure 6 shows four examples of forms of passing lights, and

Figures 7, 8 and 9 are exemplary circuit diagrams for controlling passing lights.

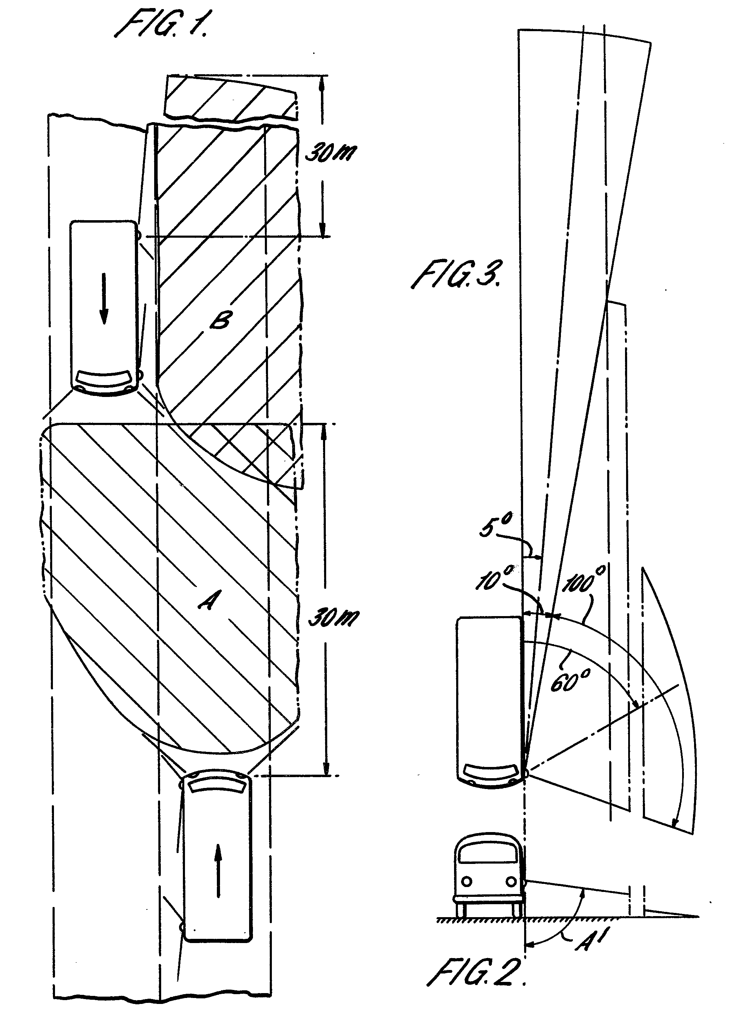

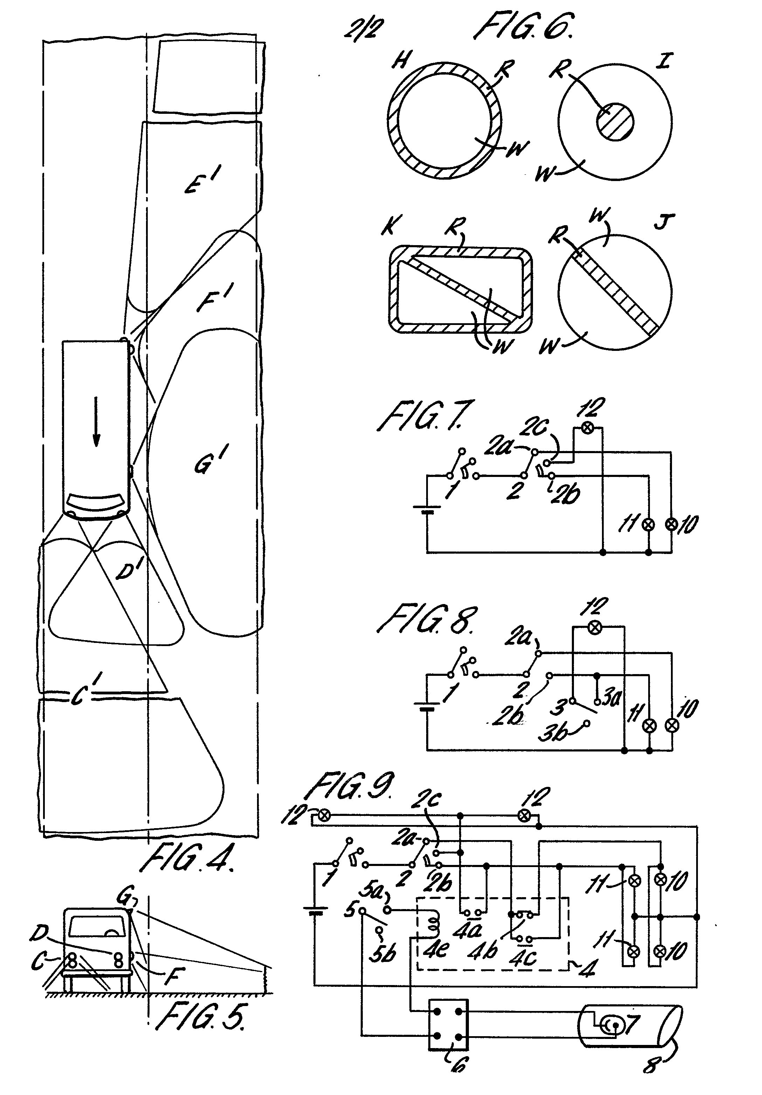

Figure 1 shows approaching vehicles having passing lights which illuminate the road 30m rearwardly. The useful illuminated area for either driver will be the sum of the illuminated areas A due to the present lower beams of his own vehicle, and B due to the courtesy passing lights of the other vehicle. These courtesy passing lights mounted on the second vehicle behave as if they were lower beams of the first vehicle located in an advanced position relative to the first vehicle, *being of comparable brightness to the headlights.*

One or more lamps can be used to illuminate effectively region B. Ideally as in Figure 3, two lower beam lamps may be provided, one of them having a symmetrical beam which is condensed within a 10 degree angle and a second one the beam of which is spread, also symmetrically, over about 100 degrees, these beams being oriented in such a way that their planes of symmetry make, respectively, with the vertical plane of symmetry of the vehicle, angles of 5 degrees and 60 degrees. One lamp having a lower assymmetrical beam combining the two above defined beams would also be suitable.

Courtesy passing lights should of course conform to lighting regulations enacted by state legislation or by international bodies such as the International Organization for Standardization regarding meeting (or lower) beams with due regard to the need for avoiding inconvenience to other road users. The light beams shall then be contained inside the cone of revolution about a vertical axis (the vehicle resting on a horizontal plane surface), the vertex of which corresponds to the light bulb with the cone opening out through an angle A' (Figure 2) not exceeding according to Portuguese law, 87.7 degrees for lamps located at a height of 1.20 meters above the ground, which angular value can be increased to 88.8 degrees for lamps at 0.60 m above the ground. (Requirements of other regulations are, in general, less demanding than Portuguese ones; for example, in the case of EEC countries, A' can attain values of the order of 89.4 degrees according to prescriptions 6.1 and 6.2 of Annex I to the "Directive du Conseil des Communautés Européennes" dated the 27th July, 1976 (76/761/EEC)).

The courtesy passing lights are preferably located on the side of the vehicle in places such as those indicated in Figure 1 and Figure 3. They can also be located at the rear corner of the vehicle nearer to the centre of the road, as in Figures 4 and 5 at locations E and F. Their heights above ground shall conform to specific Regulations, if any, for passing lights (according to Portuguese Law .60 meters is the minimum and 1.20 meters is the maximum height above ground for such lights).

A lamp having in its illuminated area a diffusing glass allowing it to be regarded from any direction without discomfort can also provide enough light to illuminate effectively a limited region of the opposite traffic lane just at the side of the vehicle, and could be installed without inconvenience for any road user at heights well above the maximum permitted height for usual passing lights (Figures 4 and 5, G and G') to complement courtesy lower beam lights located as indicated above.

To reduce still more the eye fatigue of drivers it may be shown appropriate to join the two classical lower beam lamps, which according to the present laws of some countries should be symmetrical in relation to the longitudinal plane of symmetry of the vehicle, placing both of them on the near-side, i.e. on the farthest half of the vehicle with reference to the centre line of the road (Figures 4 and 5, C and C'). The lower beam nearer the centre of the road might then be replaced by a mere side or signalling light, or its luminous intensity decreased, or its maximum reach reduced to a fraction of the usual values of a classical lower beam lights (Figure 4, D and D').

A courtesy passing light should also, when in use, be recognised as such by any driver and so should preferably have a distinctive mark or characteristic enabling it to be distinguished from a classical lower beam light. Otherwise, a driver following behind the car that uses it may be mistaken in his judgement of a very important question which is the perception of the direction of the course of the car. Therefore, courtesy passing lights preferably have either a characteristic form or a characteristic colour or alternatively a combination of forms and/or colours that enable it to be recognised by at least those drivers that need to assess the course of the car displaying it. Shown in Figure 6 and H, I, J and K, by way of illustration, are some outlines of dual-colour glasses for the illuminated area of courtesy passing lights, reference letter W representing either a white, yellow, green or blue tinted region and R representing a red, green or amber coloured region of the glass, for example.

Figures 7, 8 and 9 show examples of electric circuits associated with passing lights 12. The lights 12 may, in general, be operated manually. They can be added to an existing vehicle as supplementary lights, as in Figure 8, when they can be either connected in parallel with lower beams, 11, through a two-way switch 3 set in position 3a, to be used over non-illuminated roads, or disconnected when switch 3 is set in position 3b to be used in town or, generally, over illuminated roads. In a new vehicle, courtesy passing lights will preferably be connected as in Figure 7 through an intermediate contact 2c included in a selector switch 2 between positions 2a and 2b connecting, respectively, the headlamps circuit 10 and the passlamps circuit 11.

Figure 9 shows a circuit diagram for automatically controlled passing lights, both the usual or classical passing lights, 11, and courtesy passing lights 12. Commercially available electronic circuits 6 control through relay 4 the energising of the electrical circuits for lower beams 11 and courtesy beams 12 when photoelectric cell 7 senses a change of light from the headlamps of an approaching vehicle from upper beams to lower beams.

0043737

## CLAIMS

1.    A road vehicle having mounted thereon at least one light adapted to illuminate an area of the road surface generally laterally of the vehicle on the offside thereof.

2.    A road vehicle as claimed in Claim 1 wherein the light or at least one of the lights is adapted to illuminate an area of the road surface to the offside of the vehicle and extending rearwardly thereof.

3.    A road vehicle as claimed in Claim 2 wherein the or each light complies with state regulations for lower beam lights, the total illuminated area having a maximum length L measured in the direction longitudinally of the vehicle given by:

$$L = CV + AR,$$

CV being the length of the vehicle and AR the maximum distance allowed by state regulations for lower beams to strike the ground, the area having a minimum width of three meters measured in the direction laterally of the vehicle.

4.    A road vehicle as claimed in any preceding claim wherein the or each light comprises a feature adapted to distinguish the light in use from usual front headlights, the feature being one of the following: (a) a characteristic form, (b) a characteristic colour, (c) a characteristic association of forms and colours.

5.  A road vehicle as claimed in Claim 4 in the case where the feature is a characteristic association of forms and colours, the characteristic association being obtained through a multicoloured illuminated area.

6.  A road vehicle as claimed in any preceding claim including means for automatically energising the or each light through an electric circuit including at least one of the following features:  (a) a sensor responsive to light intensity, (b) an element responsive to light variations.

7.  A road vehicle as claimed in any preceding claim including associated asymmetrical front headlights installed on the farthest half of the vehicle with reference to the centre line of the road, and mere position signalling lights installed on a symmetrical location regarding the longitudinal plane of symmetry of the vehicle.

8.     . A road vehicle as claimed in any preceding claim wherein the lights are grouped or combined with position signalling lights.

9.     A road vehicle as claimed in any preceding claim wherein the light or at least one of the lights generates a non-glare highly scattered beam, and is located at a height above ground greater than 1.20 meters.

10.     A road vehicle as claimed in any preceding claim wherein the or each light is mounted to a/respective or a lighting unit mountable and demountable on the vehicle.

11.     A road vehicle as claimed in Claim 10 wherein the or each unit generates a beam of light rays contained within two limiting vertical planes making an angle $\alpha$ given by:

$$60^\circ \leq \alpha \leq 160^\circ \ ;$$

the or each unit being mounted on the vehicle as a meeting light complying with road regulations for meeting lights, namely regarding (1) maximum distance that the beam strikes the ground and (2) the requirement that the beam shall not dazzle any road user; the mounting of the or each unit on the vehicle being such that the limiting vertical planes make with the longitudinal plane

- 12 -                          0043737

of the vehicle angles $\beta_1$, and $\beta_2$, orientated to the rear and the side of the vehicle, and given by:

$$-5^\circ < \beta_1 < +5^\circ \text{ and } \beta_2 = \alpha + \beta_1.$$

12. A road vehicle as claimed in any preceding claim wherein the area of road surface illuminated is limited forwardly of the vehicle so as not to dazzle drivers of oncoming vehicles.

13. Method for improving road lighting concerning vehicles meeting on the road at night, said process consisting of the following three elements: (a) elimination of the blind spot created on the vision of drivers of meeting vehicles by the residual glare of present meeting beams, said elimination being obtained through the generation of (b) an illuminated area correctly located at the side of each meeting vehicle, said illuminated area being obtained by means of (c) lights complying with state regulations for road meeting lights namely regarding maximum distance at which their respective beams shall strike ground and the requirement that said beams shall not cause dazzle on any road user.

EA    /RDM/SW

0043737

1/2

FIG.1.

30m

B

30m

A

FIG.3.

5°

10°

100°

60°

A'

FIG.2.

2/12   FIG. 6.

FIG. 7.

FIG. 8.

FIG. 9.

FIG. 4.

FIG. 5.

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | <u>FR - A - 808 947</u> (MOURGEON) <br><br> * complete * <br> -- | 1-13 | B 60 Q 1/16 |
| X | <u>FR - A - 708 479</u> (CLOT) <br><br> * complete * <br> -- | 1-6 | |
| X | <u>FR - A - 912 289</u> (FROMENT) <br><br> * complete * <br> -- | 1-6, 11-13 | |
| X | <u>GB - A - 894 928</u> (GURUNLIAN) <br><br> * complete * <br><br> ------------ | 1-13 | **TECHNICAL FIELDS SEARCHED (Int. Cl.³)** <br><br> B 60 Q 1/16 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-09-1981 | ONILLON |

EPO Form 1503.1   06.78